# EUROPEAN PATENT APPLICATION

(11) **EP 4 375 903 A1**
(43) Date of publication of application: **29.05.2024**
(21) Application number: 23210621.1
(22) Date of filing: 17.11.2023
(51) Int. Cl.: G06Q 10/087, G01G 19/414, G06Q 20/20, G06Q 30/0601, G07G 1/14

(54) **ORDER MANAGEMENT AND FULFILLMENT SYSTEMS AND METHODS**

(30) Priority: 22.11.2022 US 202217992069
(71) Applicant: Illinois Tool Works Inc., Glenview IL 60025 (US)
(72) Inventor: BUHLER, Cherie, Glenview, 60025 (US); DAVIS, Robert S., Glenview, 60025 (US); CLINTON, Evan, Glenview, 60025 (US); MEYER, James, Glenview, 60025 (US); BLANKLEY, JR., Randy L., Glenview, 60025 (US); LOPEZ VILLEGAS, Angel, Glenview, 60025 (US)
(74) Representative: HGF

(57) **Abstract**

A system and method for implementing a scale based order assignment and fulfillment system is provided. The method includes receiving (via a user interface from a user) a request for an item from an entity. A database comprising links between zones is scanned and in response, a unit is assigned to a zone associated with a location of the item. The assignment results in the transmission of digital instructions to an electronic scale apparatus located within the zone and associated with the unit. The digital instructions executed for activating the electronic scale apparatus to enable a user to dynamically fulfil the request for the first item.

## Description

### CROSS-REFERENCE

This application is a continuation in part claiming priority to U.S. Application number 17/873,648, filed on 07/26/2022, which in turn claims the benefit of U.S. provisional Application number 63/227,074, filed 07/29/2021, the contents of each of which are hereby incorporated by reference.

### TECHNICAL FIELD

The present application relates generally to assignment and detection of scales used to weigh food products in supermarkets, and more particularly to a system, including one or more scales, that facilitates remote customer ordering and fulfillment operations.

### BACKGROUND

Scales have been used in stores such as supermarkets and groceries to weigh and price food items and to generate a pricing label for such food items. A typical store includes multiple scales located in multiple perishables departments. It is important that weighed items be priced properly and therefore scales are commonly connected into a store network. Various types of scale networks exist.

U.S. Patent No. 8,304,668 discloses and claims an inventive and advantageous scale system for handling electronic product orders. Still, with the rise of electronic ordering for all types of goods, further improvements and enhancements are desirable.

### SUMMARY

In accordance with some implementations, a gateway hardware controller includes: a non-transitory computer-readable storage medium; and one or more processors coupled to the non-transitory computer-readable storage medium, wherein the non-transitory computer-readable storage medium comprises specialized program instructions that, when executed on the one or more processors, cause the gateway hardware controller to perform operations comprising: receiving via a user interface from a user, a request for a first item from an entity; scanning a database comprising links between a plurality of zones, at differing locations of a physical environment of the entity, and specified units of said entity, wherein each zone of the plurality of zones is associated with differing items provided by the entity; in response to results of said scanning, assigning a first unit of the specified units to a first zone of the plurality of zones, wherein the first unit is associated with a location of the first item; and in response to the request and results of said assigning, transmitting to an electronic scale apparatus located within the first zone and associated with the first unit, digital instructions executed for activating the electronic scale apparatus to enable a user to dynamically fulfil the request for the first item.

In accordance with some implementations, a gateway hardware controller includes: a non-transitory computer-readable storage medium; and one or more processors coupled to the non-transitory computer-readable storage medium, wherein the non-transitory computer-readable storage medium comprises specialized program instructions that, when executed on the one or more processors, cause the gateway hardware controller to perform operations comprising: receiving via a user interface from a user, a request for a first item and a second item from an entity; scanning a database comprising links between a plurality of zones, at differing locations of a physical environment of the entity, and specified units of said entity, wherein each zone of the plurality of zones is associated with differing items provided by the entity; in response to results of said scanning, first assigning a first unit of the specified units to a first zone of the plurality of zones, wherein the first unit is associated with a first location of the first item; in response to results of said scanning, second assigning a second unit of the specified units to a second zone of the plurality of zones, wherein the second unit is associated with a second location of the second item, and wherein the first location differs from the second location; in response to the request and results of said first assigning, transmitting to a first electronic scale apparatus located within the first zone and associated with the first unit, digital instructions executed for activating the first electronic scale apparatus to enable a first user to dynamically fulfil the request for the first item; and in response to the request and results of said second assigning, transmitting to a second electronic scale apparatus located within the second zone and associated with the second unit, digital instructions executed for activating the second electronic scale apparatus to enable a second user to dynamically fulfil the request for the second item.

In accordance with some implementations, at a gateway hardware controller having a processor, a method is performed including: receiving via a user interface from a user, a request for a first item from an entity; scanning a database comprising links between a plurality of zones, at differing locations of a physical environment of the entity, and specified units of said entity, wherein each zone of the plurality of zones is associated with differing items provided by the entity; in response to results of said scanning, assigning a first unit of the specified units to a first zone of the plurality of zones, wherein the first unit is associated with a location of the first item; and in response to the request and results of said assigning, transmitting to an electronic scale apparatus located within the first zone and associated with the first unit, digital instructions executed for activating the electronic scale apparatus to enable a user to dynamically fulfil the request for the first item.

The details of one or more embodiments are set forth in the accompanying drawings and the description below. Other features, objects, and advantages will be apparent from the description and drawings, and from the claims.

### BRIEF DESCRIPTION OF THE DRAWINGS

Fig. 1 is a schematic of an online order management and fulfillment system;
Fig. 2 is a schematic depiction of an exemplary scale;
Figs. 3-9 show exemplary interface screens presented on a scale used in the order management and fulfillment system;
Fig. 10 illustrates a scale-based order fulfillment system that includes a gateway hardware device configured as a scale detection and assignment manager system;
Fig. 11 is a flowchart representation of an exemplary method for assigning a zone for activating an electronic scale apparatus to enable a user to fulfil an item request;
Fig. 12 is a flowchart representation of an exemplary method for assigning multiple zones for activating multiple electronic scale apparatuses to enable users to fulfil item requests;
Fig. 13 illustrates a computer system used by or comprised by the systems of Fig. 1 and Fig. 10 for improving software/hardware implemented scale detection and assignment technology.

### DETAILED DESCRIPTION

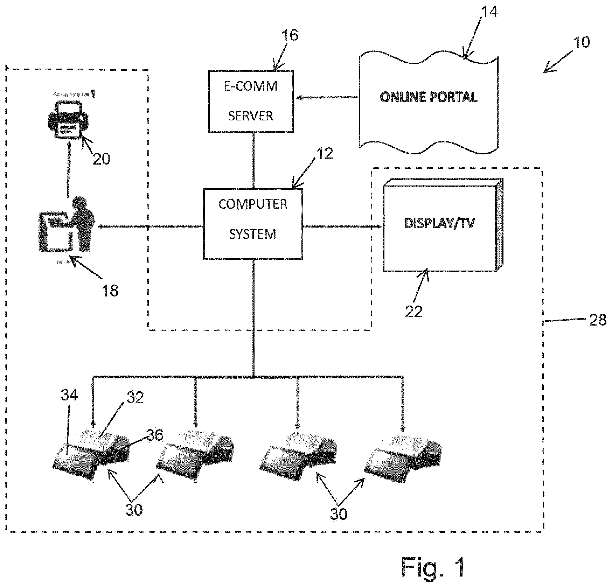

Referring to Fig. 1, a system a scale-based order management and fulfillment system 10 includes a computer system 12 configured as an order manager. The computer system could be comprised of one or more computers the location of which could vary. For example, the order management functionality could reside in the cloud, on a virtual machine, on a headquarters dedicated server or on a store-specific server. The computer system 12 is connected for electronic receipt of customer orders from one or more external devices or systems. Here, a customer online portal 14 associated with a store chain e-commerce server 16 operates as one device/system capable of providing orders to the computer system 12, and an in-store kiosk 18 operates as another device/system capable of providing orders to the computer system 12. The kiosk 18 includes an associated printer mechanism 20 at which in-store customers can choose to print a ticket with order details or, in the case of a customer simply waiting in line, a customer queue number. The computer system 12 is connected for delivering display information to a display 22 (e.g., a TV), which can include now serving/queue information and/or other information.

A plurality of scales 30 are also located within a store 28 in which the kiosk 18 and display 22 are located. Computer system 12 may be located external to store 28 as illustrated in Fig. 1. Alternatively, computer system 12 may be located (physically and logically) internal to store 28. Each scale includes a weigh station 32 and a display 34. Weigh station 32 may take the form of a platter-type member supported in relationship to a load cell (internal of the scale housing) that produces a weight indicative signal when a food item is placed on the weigh station 32 for weighing. Illustrated display 34 may take the form of an LCD-type display, but other technologies could be used. In the illustrated embodiment the display 34 is a touch screen-type display that also functions as a user input device by displaying image buttons/icons that can be triggered or selected by an operator. A side portion 36 of the scale housing holds a label printer and associated supply of labels, which are dispensed through a label slot in the housing. Although display 34 is shown incorporated into the housing of the scale 30, the display could take the form of a marquee-type display located on a support extending upward from the scale housing. In some implementations the display need not be attached to the scale/printer via a support but could be a separately housed console that is logically attached to the scale/printer.

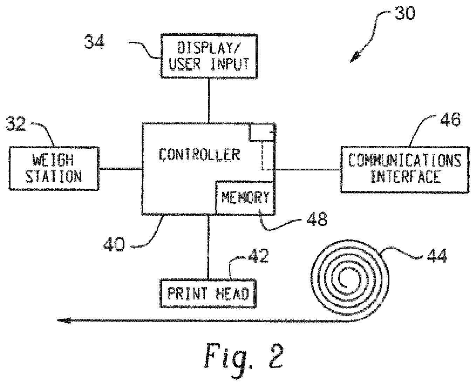

Referring the exemplary schematic of Fig. 2, each scale 30 includes a controller 40, such as a microprocessor-based unit, connected to control the display/user input 34 and connected to receive weight indicative signals from the weighing station 32. A print head 42 and associated supply of label stock 44 that can be moved past the print head 42 is also shown. In one example the print head 42 may be a thermal print head for use with thermally activated label stock. However, other types of printing technologies and label media could also be used. Likewise, RFID read/write technology could be incorporated for dealing with labels having RFID tags. The controller 40 is also connected with a communications interface 46, which may take the form of a standard connector (and associated circuitry) for a USB, RS-232, Ethernet or other hard-wired communication line. In another example the communications interface 46 may be formed by a wireless communication device such as an RF transceiver. Multiple communication interfaces could also be provided. The illustrated controller 40 includes associated memory 48 for storing product information (e.g., product names, characteristics and pricing stored in association with corresponding product numbers), software and firmware. By way of example, each scale 30 may be of the type described in U.S. Patent No. 11,041,751, the entirety of which is incorporated herein by reference.

Thus, each scale 30 includes a weighing station for receiving food products to be weighed, the weighing station having an associated mechanism (e.g., internal load cell) for producing weight indicative signals. Each scale also includes a controller for receiving weight indicative signals from the mechanism, where the controller operable to establish a price for a weighed food product based in part upon a weight indicative signal produced for that food product. Each scale further includes a communications interface for receiving customer order information from the computer system and for communicating order handling information to the computer system. Each scale further includes an operator interface including an operator display, the controller connected with the operator display for control thereof. The controller of each scale is configured to receive the customer order information and display, on the operator display, information enabling the operator to select, view and process orders.

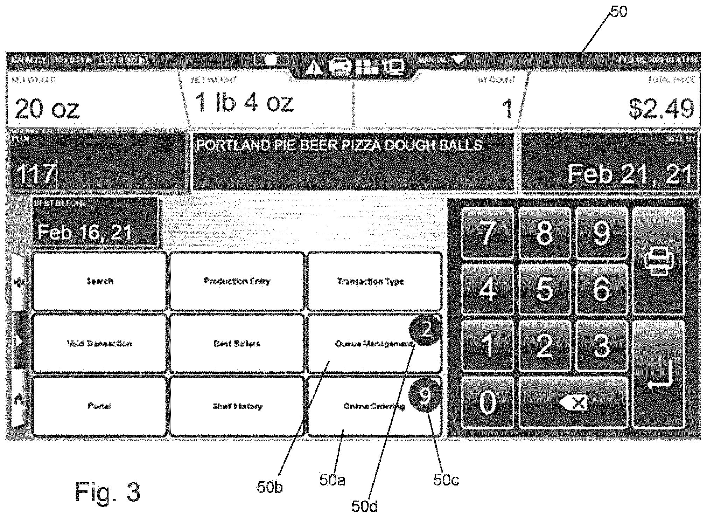

The computer system 12 is configured to dynamically process customer orders for fulfillment by scale operators within the store. In this regard, as seen in exemplary scale interface screen 50 of Fig. 3, various operator selectable buttons are presented on the display, including an Online Ordering button 50a and a Queue Management button 50b. Each of these buttons is overlaid with a corresponding visual notification graphic 50c and 50d that indicates the number or online orders waiting to be processed and the number of persons in the queue waiting to be served in the department in which the scale is located. These graphics are maintained and updated by the computer system 12, which communicates the updates to the scales, in real time. When additional orders are sent out to the scales, causing update of the graphic 50c, the computer system 12 can also trigger the scales to output a visual and/or audio alert to communicate that an update has been made.

In addition, the computer system 12 tracks incoming customer online and/or or kiosk orders and limits customer order completion availability based upon a number of orders permitted during a specified time period. So, for example, the computer system 12 may only permit 10 online orders to be processed per hour, so as to prevent overloading of scale operators in the store department. If additional online orders come in once the limit is reached, the computer system 12 will communicate to the e-commerce server 16 that time slots are not available until a next hour and/or present specific time slots that are available and open for selection. The computer system 12 is further configured to track incoming customer online orders and limit customer order completion availability based upon operating hours of the perishables department of the store. So, for example, if the online order information received from the e-commerce server 16 after the deli department has closed, the computer system 12 communicates back to the e-commerce server that the order is refused and/or presents options for completion of the order at a later time (e.g., the next day when the department is again open). For this purpose, the computer system 12 includes a database that includes store department hours. Further, the computer system 12 tracks whether orders are timely completed, and is configured to alert as an order approaches its deadline for completion. Thus, as orders come near customer pickup times, the computer system 12 will trigger the scales to alert operators to the need to complete the order. For example, is a customer places an order for 2:00 PM pickup/completion, and the order it not filled by 1:40 PM, the computer system may initiate a color change and/or flashing of the graphic 50c, as well as causing the scales to output an audio alert in the form of beeping to hopefully catch attention that an order needs to be filled immediately.

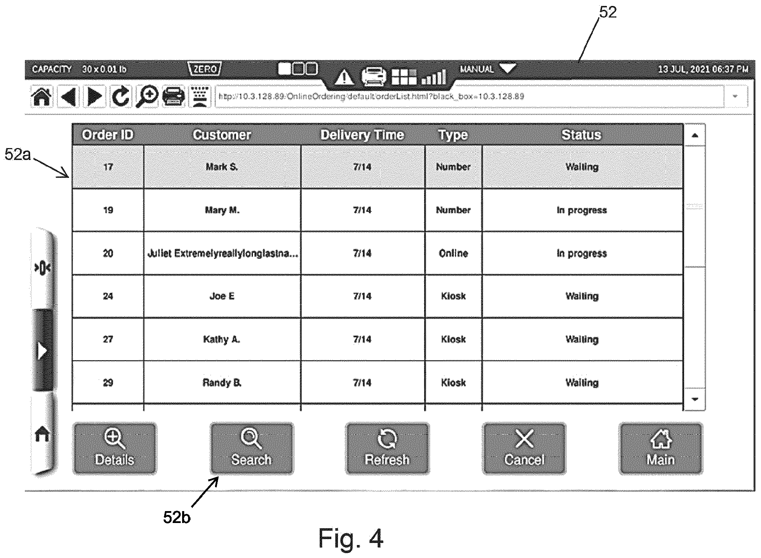

If the scale operator selects the Online Ordering button 50a, the display will transition to the exemplary interface screen 52 of Fig. 4, which shows a listing 52a of orders to be processed. Here, the listing includes Order ID, Customer name, Delivery Time, Type and Status fields for each order. Notably, the Type field identifies whether the order is an online-type order, a kiosk-type order or, simply a person waiting for live ordering (indicated by Number). The computer system 12 can be configured to filter customer orders according to target completion time associated with each customer order and to incorporate, into the customer order information communicated to the scales, prioritization data that causes the scales to, at least initially, display received customer orders in the list format sequentially based on the target completion times for the customer orders. The computer system 12 may also be configured such that sorting of the orders based upon any of the Order ID, Customer name, Delivery Time, Type and Status fields is available to the scale operator by simply touching the field name. Moreover, in embodiments, the computer system 12 tracks completion or non-completion of the customer orders and, upon non-completion of a given customer order according to its associated target completion time, generates an alert message that is electronically communicated to a designated store contact (e.g., SMS message or e-mail to a store manager or department manager).

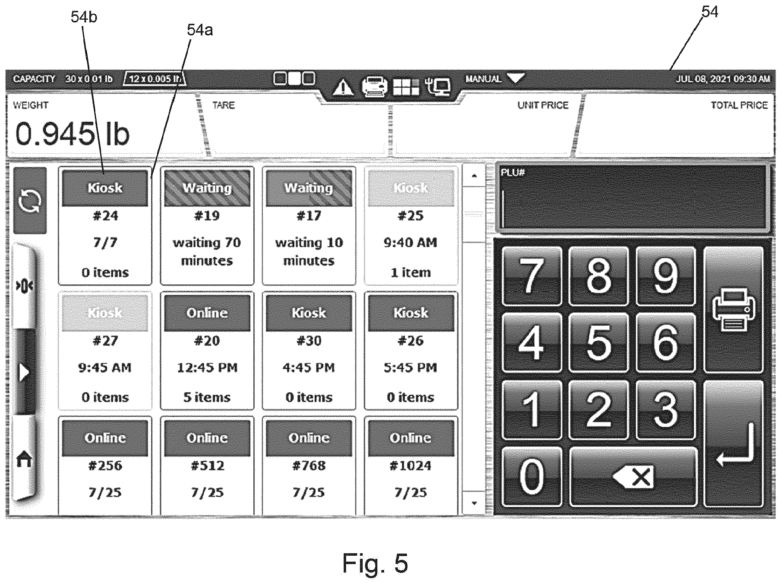

The exemplary interface screen 54 of Fig. 5 shows an alternative display format for the orders, which is tiled. Each tile 54a includes an order type field 54b which specifies the order type. In addition, a color coding may be overlaid on the type field (e.g., red for overdue, blue for future, yellow for near future and teal for customers that are waiting in-person).

Regardless of the exact format of the interface screen (e.g., 52 or 54), the computer system 12 is configured to associate each customer order with the online ordering portal or the kiosk and incorporates, into the customer order information communicated to the scales, an order source indicator that causes the scales to display received customer orders with the visual indication of whether the customer order is a kiosk-type order or an online-type order. Customer orders that will be in-person are also tracked with the queue manager.

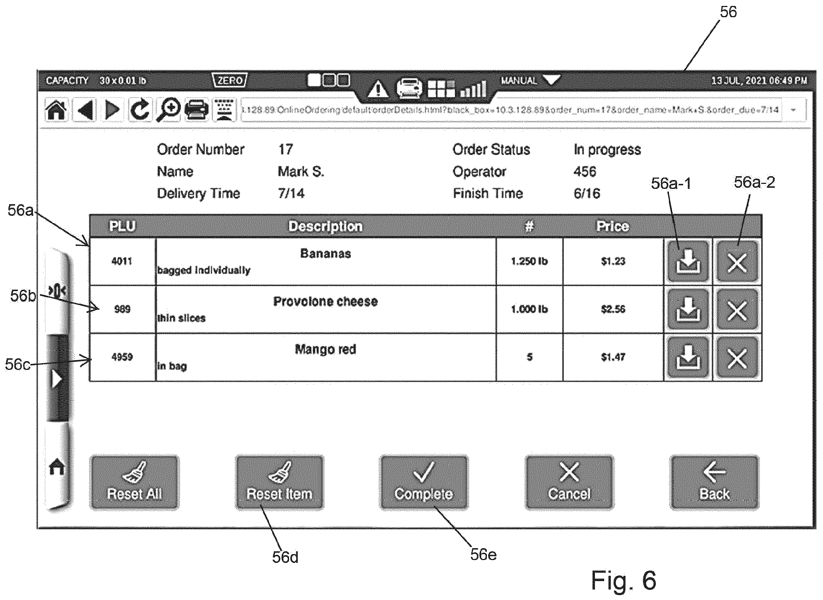

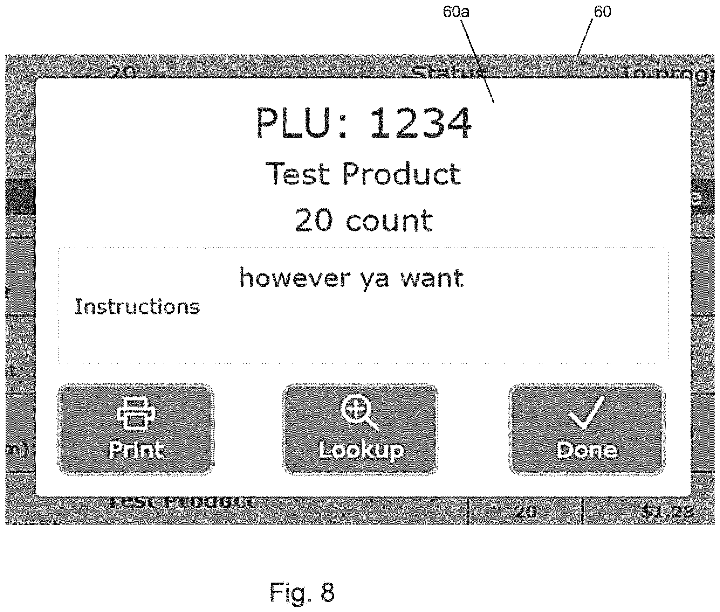

If the scale operator selects one of the orders (e.g., by pressing the Order ID field of the order), then the order details are presented to the scale operator, per the exemplary user interface screen 56 of Fig. 6. In some embodiments, when the computer system 12 receives an indication that a given customer order has been selected for handling by an operator of a given scale, the computer system updates the order information of other scales so that the given customer order is locked from selection by another operator on another scale. In the interface screen 56 of Fig. 6, each item in the order is designated as a line item 56a, 56b and 56c of the order, each with associate fields, including PLU (price look-up number), Description , # (desired amount by weigh or count) and Price. In addition, each line item includes a selectable fill order graphic 56a-1 by which the scale operator can begin to fill the order, with selection of such graphic bring up any further order details for the line item and/or automatically transitioning the displayed interface to a standard weighing screen in which the PLU for the item being filled is already populated to facilitate weighing, pricing and label printing. For example, Fig. 8 shows an exemplary user interface screen 60 in which a pop-up window 60a is generated with the additional order details, such as instructions, which could be how thick to slice the food product (e.g., thin or thick) or how to package the food product (e.g., separate into two packages).

Referring again to Fig. 6, each line item also includes an associated item status graphic 56a-2, that may also be color-coded. For example, a blue X graphic may indicate an item that is yet to be filled, a red X graphic indicating an item that cannot be filled, a green checkmark graphic may indicate an item that has already been filled, and a yellow arrow graphic indicating an item that has been filled with a substitute or alternative item (e.g., the order brand of ham replaced with an alternative brand). Once an item is filled or identified as unfillable, the computer system 12 may disable that line item row from further selection, unless the item is reset by the scale operator (e.g., using the selectable Reset Item button 56d). Upon completion of all line items, the scale operator selects the Complete button 56e to communicate that the order is completely filled (but for any items not fillable).

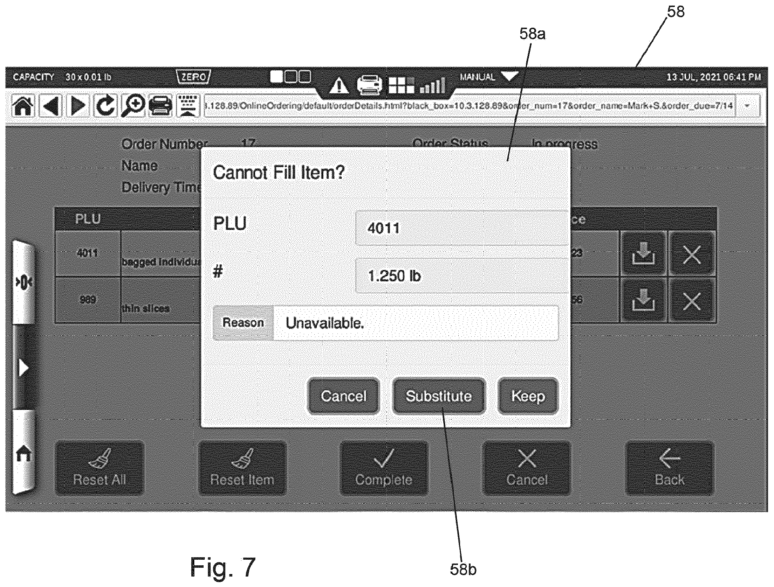

The computer system 12 interfaces with the scale during order filling by the scale operator, and is configured such that, for each customer order, the computer system 12 tracks each of (1) time of submission of the customer order to the computer system, (2) time of initial opening of the customer order, by a scale operator, for review and fulfillment and (3) time of completion, by the scale operator, of the customer order. The computer system 12 may also be configured to track timing of each line item, substitutes made by the scale operator, and items that are unfillable from the order. In this regard, exemplary user interface screen 58 of Fig. 7 shows a pop-up window 58a that the scale operator can use to indicate that an item cannot be filled and/or substitute another item (e.g., using the selectable Substitute button 58b).

The dynamic handling of customer orders by the computer system 12 also enables order to be changed or canceled, at least in some situations. So, for example, if a customer who previously submitted an online order via the portal 14 later determines to remove or change an item in the order, or cancel the order entirely, the customer can do so provided a time criteria is met. Thus, the computer system 12 receives, for example, order cancellations from the e-commerce server 16 and determines acceptance or denial of each order cancellation based upon a time parameter associated with the customer order to which such order cancellation relates. The time parameter may for example, require all cancellations to occur at least one hour before the designated completion time of the order. The exact time criteria could be different or adjustable (e.g., by a store manager or department manager).

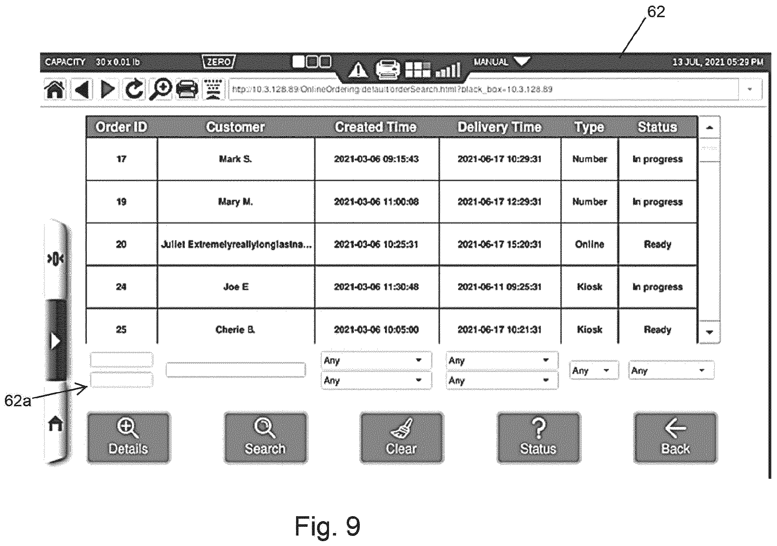

Referring again to Fig. 4, the order listing screen 52 includes order attributes 52a and various function buttons, including a selectable search button 52b that enables a scale operator to pull up the user interface search screen 62 of Fig. 9, which includes search fields 62a that enable the scale operator to search by the various order field data. If customers or a manager inquire about an order, the scale operator can attempt to search and identify order status.

Various other features can be implemented in the online order management system 10, including those described in the Summary section above.

### In examples: 52b

Ex1. A scale-based order management and fulfillment system, comprises: a computer system configured as an order manager, the computer system connected for electronic receipt of customer orders from one or more external devices or systems; a plurality of scales within a store, each scale including: a weighing station for receiving food products to be weighed, the weighing station having an associated mechanism for producing weight indicative signals; a controller for receiving weight indicative signals from the mechanism, the controller operable to establish a price for a weighed food product based in part upon a weight indicative signal produced for that food product; a communications interface for receiving customer order information from the computer system and for communicating order handling information to the computer system; an operator interface including an operator display, the controller connected with the operator display for control thereof. The controller is configured to receive the customer order information and display, on the operator display, information enabling the operator to select, view and process orders. The computer system is configured to dynamically process customer orders for fulfillment by carrying out at least one of the following operations: (a) tracking incoming customer orders and limiting customer order completion availability based upon a number of orders permitted during a specified time period; and/or (b) receiving order cancellations and determining acceptance or denial of each order cancellation based upon a time parameter associated with the customer order to which such order cancellation relates; and/or (c) where a first external device or system is comprised by an in-store kiosk and a second external device or system is comprised by an online ordering portal, associating each customer order with the first external device or system or the second external device or system and incorporating, into the customer order information communicated to the scales, an order source indicator that causes the scales to display received customer orders with a visual indication of whether the customer order is a kiosk-type order or an online-type order.

Ex2. The system of Ex1, wherein the computer system is configured to carry out at least two of operations (a), (b) or (c).

Ex3. The system of Ex1, wherein the computer system is configured to carry out all of operations (a), (b) and (c).

Ex4. The system of any preceding example, wherein the computer system is further configured to: track incoming customer orders and limit customer order completion availability based upon operating hours of a perishables department of the store.

Ex5. The system of any preceding example, wherein the computer system is further configured to: filter customer orders according to a target completion time associated with each customer order and incorporate, into the customer order information communicated to the scales, prioritization data that causes the scales to display received customer orders in a list format that is sequential based on the target completion times for the customer orders.

Ex6. The system of any preceding example, wherein the computer system is further configured to: track completion or non-completion of the customer orders and, upon non-completion of a given customer order according to its associated target completion time, generating an alert message that is electronically communicated to a designated store contact.

Ex7. The system of any preceding example, wherein the computer system is further configured to: for each customer order, track each of (1) time of submission of the customer order to the computer system, (2) time of initial opening of the customer order, by a scale operator, for review and fulfillment and (3) time of completion, by the scale operator, of the customer order.

Ex8. The system of any preceding example, wherein the computer system is further configured to: upon receipt, from a given scale, of an indication that a given customer order has been selected for handling by an operator of the given scale, lock the given customer order from selection by another operator on another scale.

Ex9. The system of any preceding example, wherein the computer system is further configured to: upon receipt, from a given scale, of an indication that a given customer order has been selected for handling by an operator of the given scale, partially fill an order (e.g., with one of two items in the order), close out the order, and resume the order on another scale (with another operator) to resume filling (e.g., with the second of the two items in the order) the order.

Ex10. The computer system of any preceding example, wherein the scales interface with the computer system via one of a web page interface or a scale online ordering client application.

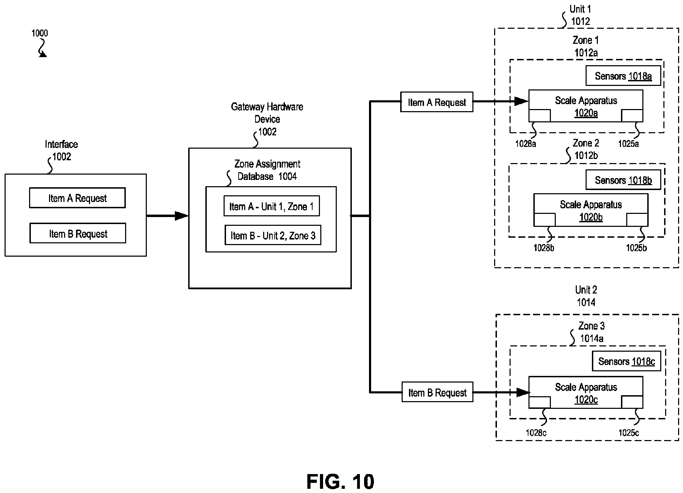

Fig. 10 illustrates a scale-based order fulfillment system 1000 that includes a gateway hardware device 1002 configured as a scale detection and assignment manager system, according to some implementations. The gateway hardware device 1002 is configured to assign item (e.g., a product) requests (for fulfilment) to electronic scale apparatuses 1020a, 1020b, and 1020c located within specified zones (e.g., locations) of specified units (e.g., departments). Gateway hardware device 1002 may be comprised of one or more computers (or controllers) the location of which could vary. For example, the order fulfilment functionality may reside in the cloud, on a virtual machine, on a headquarters dedicated server or on a store-specific server.

Scale-based order fulfillment system 1000 of FIG. 10 includes an interface 1002, gateway hardware device 1002, and electronic scale apparatuses 1020a, 1020b, and 1020c interconnected (e.g., through a network). Interface 1002 may comprise any type of hardware and/or software interface configured to accept item requests (from a user) for fulfilment. Gateway hardware device 1002 comprises a zone assignment database 1004 configured to store assigned (linked) item requests (e.g., item A request and item B request) to specified zones (e.g., zone 1 1012a, zone 2 1012b, and/or zone 3 1014a) of specified units (e.g., unit 1 1012 and/or unit 2 1014) in response to preconfigured unit/zone/scale information within zone assignment database 1004 and/or sensor information retrieved from sensors (e.g., sensors 1018a of zone 1 1012a, sensors 1018b of zone 2 1012b, and sensors 1018c of zone 3 1014a) located within the zones and/or sensors (e.g., sensors 1025a, 1025b, and/or sensors 1025c) integrated with electronic scale apparatuses 1020a, 1020b, and 1020c. For example, item requests may be linked as follows: item A-unit1, zone 1 and item B-unit2, zone 3. Electronic scale apparatus 1020a includes sensors 1025a and audio/video indicators 1028a that may include specialized circuitry/logic. Electronic scale apparatus 1020b includes sensors 1025b and audio/video indicators 1028b that may include specialized circuitry/logic. Electronic scale apparatus 1020c includes sensors 1025c and audio/video indicators 1028c that may include specialized circuitry/logic. Audio/video indicators 1028a, 1028b, and 1028c may include any type of audible or visual indicators configured to audibly or visually alert a user (at a scale apparatus) to fulfil an order routed via gateway hardware device 1002. For example, audio/video indicators 1028a, 1028b, and 1028c may include display devices, indicator lights, amp/speaker devices, etc. Gateway hardware device 1002 and electronic scale apparatuses 1020a, 1020b, and 1020c each may comprise an embedded device(s). An embedded device is defined herein as a dedicated device or computer comprising a combination of computer hardware and software (fixed in capability or programmable) specifically designed for executing a specialized function. Programmable embedded computers or devices may comprise specialized programming interfaces. In one embodiment, Gateway hardware device 1002 and electronic scale apparatuses 1020a, 1020b, and 1020c may each comprise a specialized hardware device comprising specialized (non-generic) hardware and circuitry (i.e., specialized discrete non-generic analog, digital, and logic-based circuitry) for (independently or in combination) executing a process described with respect to FIGS. 1-13. The specialized discrete non-generic analog, digital, and logic-based circuitry (e.g., sensors 1025a, sensors 1025b, sensors 1025c, etc.) may include proprietary specially designed components (e.g., a specialized integrated circuit, such as for example an Application Specific Integrated Circuit (ASIC) designed for only implementing an automated process for improving software/hardware implemented scale detection and assignment technology. Sensors 1018a, 1018b, 1018c, 1025a, 1025b, and 1025c may include any type of internal or external sensors including, inter alia, GPS sensors, Bluetooth beaconing sensors, cellular telephone detection sensors, Wi-Fi positioning detection and signal strength sensors, triangulation detection sensors, activity tracking sensors, temperature sensors, ultrasonic sensors, optical sensors, a video retrieval device, humidity sensors, voltage sensors, network traffic sensors, RFID sensors, infrared sensors, motion sensors, a microphone, optical sensors, thermal imaging apparatus/sensors, optical and vibrational sensors, etc. A network may include any type of network including, inter alia, a local area network, (LAN), a wide area network (WAN), the Internet, a wireless network, etc.

As described with respect to scales 30 of Fig. 1, each of electronic scale apparatuses 1020a, 1020b, and 1020c may include a weigh station and a display (e.g., audio/video indicators 1028a, 1028b, and 1028c). A weigh station may take the form of a platter-type member supported in relationship to a load cell (internal of the scale housing) that produces a weight indicative signal when a food item is placed on the weigh station for weighing. A display may take the form of an LCD-type display, but other technologies could be used. A display may comprise a touch screen-type display that also functions as a user input device by displaying image buttons/icons that can be triggered or selected by an operator. A side portion of each of electronic scale apparatuses 1020a, 1020b, and 1020c may include a label printer and associated supply of labels, which are dispensed through a label slot in the housing.

Scale-based order fulfillment system 1000 is configured to execute a sensor implemented process for assigning electronic scale apparatuses 1020a, 1020b, and 1020c to zones for item order fulfilment as described in the following examples:
Example 1- Gateway hardware controller 1002 may be configured to select a zone and associated electronic scale apparatus via a process for detecting already configured electronic scale apparatuses. The scale/zone selection process may be executed via the following sensor implemented retrieval processes:
   An electronic scale apparatus may be configured to scan a zone(s) for Bluetooth signals from nearby electronic scale apparatuses. Subsequently, the nearby electronic scale apparatuses may be queried for current zone assignments.
   An electronic scale apparatus may be configured to scan a zone(s) for Wi-Fi signals from nearby electronic scale apparatuses. Subsequently, the nearby electronic scale apparatuses may be queried for current zone assignments.
   An electronic scale apparatus may be configured to probe a local network for nearby electronic scale apparatuses (e.g., ip address ranges). Subsequently, the nearby electronic scale apparatuses may be queried for current zone assignments.
   Gateway hardware controller 1002 may be configured to select a zone based on existing zone usage (e.g., frequently received items) and/or configuration (e.g., label types loaded into electronic scale apparatuses).
Example 2- Gateway hardware controller 1002 may be configured to select a zone and associated electronic scale apparatus via a process for detecting electronic scale apparatus user/operator information. The scale/zone selection process may be executed via the following sensor implemented retrieval processes:
   An electronic scale apparatus may be configured to detect/identify nearby user/operators who have logged in manually or are using a wireless hands-free login device.
   An electronic scale apparatus may be configured to query a database to determine detect/determine zone operator usage.
Example 3- Gateway hardware controller 1002 may be configured to select a zone and associated electronic scale apparatus via a process for detecting environmental factors. The scale/zone selection process may be executed via the following sensor implemented retrieval process:
   An electronic scale apparatus may be configured to detect a Wi-Fi or BLE signal strength to pinpoint a zone location (e.g., zone 2 electronic scale apparatuses may be further away from a Wi-Fi access point than zone 1 electronic scale apparatuses).

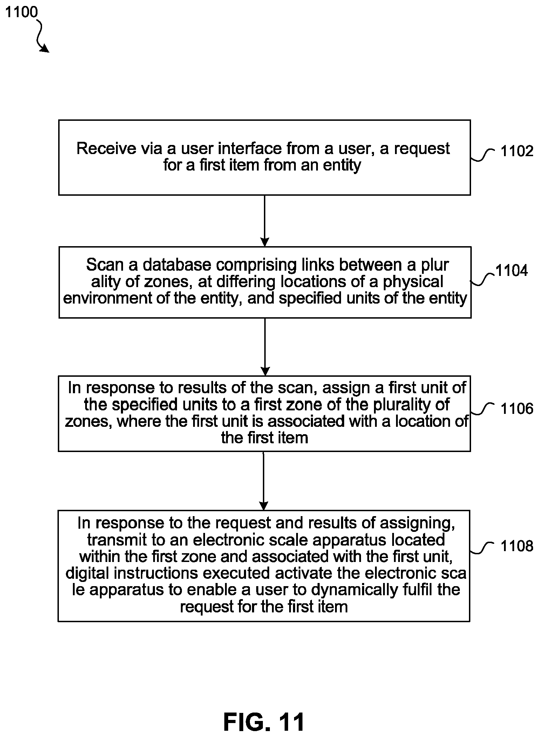

Fig. 11 is a flowchart representation of an exemplary method 1100 for assigning a zone for activating an electronic scale apparatus to enable a user to fulfil an item request, in accordance with some implementations. In some implementations, the method 1100 is performed by a device, such as a hardware device such as e.g., gateway hardware device 1002 and electronic scale apparatuses 1020a-1020c of Figure 10). In some implementations, the method 1100 is performed by processing logic, including hardware, firmware, software, or a combination thereof. In some implementations, the method 1100 is performed by a processor executing code stored in a non-transitory computer-readable medium (e.g., a memory). Each of the blocks in the method 1100 may be enabled and executed in any order.

At block 1102, the method 1100 receives (via a user interface from a user) a request for a first item from an entity (e.g., a company).

At block 1104, the method 1100 scans a database comprising links (e.g., connections) between a plurality of zones (at differing locations of a physical environment of the entity) and specified units of the entity. Each zone (of the plurality of zones) may be associated with differing items provided by the entity.

At block 1106 (in response to results of the database scan of block 1104), a first unit (of the specified units) is assigned to a first zone (of the plurality of zones). The first unit is associated with a location of the first item.

At block 1108 (in response to the request and results of assigning the first unit), digital instructions are transmitted to an electronic scale apparatus located within the first zone and associated with the first unit. The digital instructions are executed for activating the electronic scale apparatus to enable a user to dynamically fulfil the request for the first item.

In some implementations, activating the electronic scale apparatus includes enabling operation of a visual indicator of the electronic scale apparatus. The visual indicator is configured to visually alert the user to fulfil the request.

In some implementations, activating the electronic scale apparatus includes enabling operation of an audible indicator of the electronic scale apparatus. The audible indicator audibly alerts the user to fulfil the request.

In some implementations, the method further receives (from the electronic scale apparatus) scanned Bluetooth signal information and queried zone assignments. The scanned Bluetooth signal information is associated with Bluetooth signals transmitted from additional electronic scale apparatuses located within a signal transmission area with respect to communications with the electronic scale apparatus. The queried zone assignments are associated with currently assigned zones of the additional electronic scale apparatuses. The first unit is assigned to the first zone further in response to the scanned Bluetooth signal information and the queried zone assignments.

In some implementations, the method further receives (from the electronic scale apparatus) scanned Wi-Fi signal strength information and queried zone assignments. The scanned Wi-Fi signal strength information is associated with scanned Wi-Fi signals transmitted from additional electronic scale apparatuses located within a signal transmission area with respect to communications with the electronic scale apparatus. The queried zone assignments are associated with currently assigned zones of the additional electronic scale apparatuses. The first unit is assigned to the first zone further in response to the scanned Wi-Fi signal strength information and the queried zone assignments.

In some implementations, the method further receives (from the electronic scale apparatus) scanned local area network (LAN) information and queried zone assignments. The scanned LAN information is associated with ip address ranges of additional electronic scale apparatuses located within a signal transmission area with respect to communications with the electronic scale apparatus. The queried zone assignments are associated with currently assigned zones of the additional electronic scale apparatuses. The first unit is assigned to the first zone further in response to the scanned LAN information and the queried zone assignments.

In some implementations, the database scan (of block 1104) results in retrieval of existing zone usage data associated with attributes of items associated with each zone. The first unit is assigned to the first zone further in response to the existing zone usage data.

In some implementations, the database scan (of block 1104) results in retrieval of configuration attributes of additional electronic scale apparatuses located within a specified distance from the electronic scale apparatus. The first unit is assigned to the first zone further in response to the configuration attributes. The configuration attributes may include, inter alia, attributes such as hardware attributes, software attributes, mechanical attributes, etc.

In some implementations, the method further receives (from the electronic scale apparatus) information identifying users that are manually logged into additional electronic scale apparatuses located within a specified range of the electronic scale apparatus. The first unit is assigned to the first zone further in response to the information.

In some implementations, the method further receives (from the electronic scale apparatus) information identifying users that are remotely logged into additional electronic scale apparatuses located within a specified range of the electronic scale apparatus. The first unit is assigned to the first zone further in response to the information. The users may be remotely logged into the additional electronic scale apparatuses via a hands-free login hardware device.

In some implementations, the database scan (of block 1104) results in retrieval of existing zone usage data associated with users located within each zone. The first unit is assigned to the first zone further in response to the existing zone usage data.

In some implementations, the method further receives (from the electronic scale apparatus) scanned Wi-Fi signal strength information associated with a scanned Wi-Fi signal transmitted from a Wi-Fi access point located within a signal transmission area with respect to communications with the electronic scale apparatus. The first unit is assigned to the first zone further in response to the scanned Wi-Fi signal strength information.

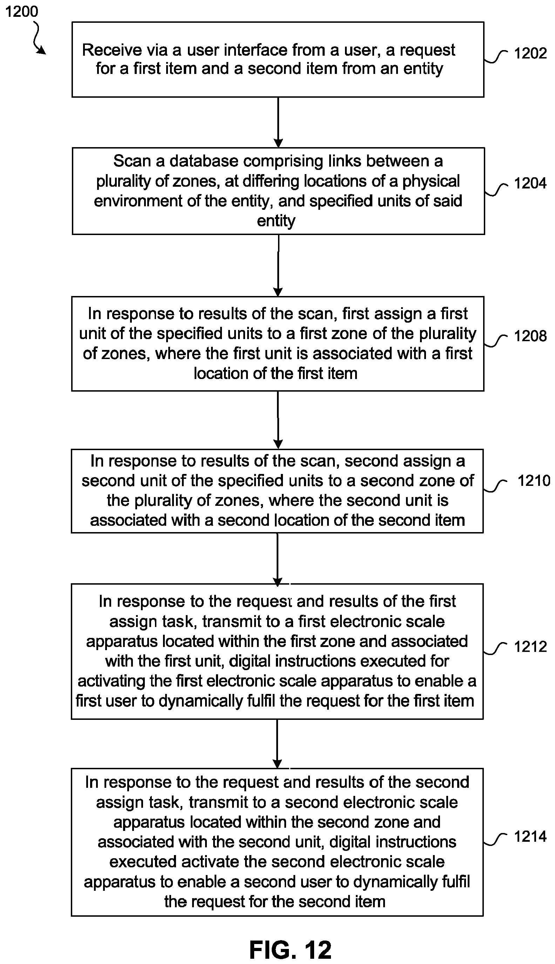

Fig. 12 is a flowchart representation of an exemplary method 1200 for assigning multiple zones for activating multiple electronic scale apparatuses to enable users to fulfil item requests, in accordance with some implementations. In some implementations, the method 1200 is performed by a device, such as a hardware device such as e.g., gateway hardware device 1002 and electronic scale apparatuses 1020a-1020c of Figure 10). In some implementations, the method 1200 is performed by processing logic, including hardware, firmware, software, or a combination thereof. In some implementations, the method 1200 is performed by a processor executing code stored in a non-transitory computer-readable medium (e.g., a memory). Each of the blocks in the method 1200 may be enabled and executed in any order.

At block 1202, the method 1200 receives (via a user interface from a user) a request for a first item and a second item from an entity (e.g., a company).

At block 1204, the method 1200 scan a database comprising links (e.g., connections) between a plurality of zones (at differing locations of a physical environment of the entity) and specified units of the entity. Each zone (of the plurality of zones) may be associated with differing items provided by the entity.

At block 1208 (in response to results of the database scan of block 1104), a first unit (of the specified units) is first assigned to a first zone (of the plurality of zones). The first unit is associated with a first location of the first item.

At block 1210 (in response to results of the database scan of block 1104), a second unit (of the specified units) is second assigned to a second zone (of the plurality of zones). The second unit is associated with a second location of the second item. The first location may differ from the second location.

At block 1212, (in response to the request and results of first assigning the first unit), digital instructions are transmitted to a first electronic scale apparatus located within the first zone and associated with the first unit. The digital instructions are executed for activating the first electronic scale apparatus to enable a first user to dynamically fulfil the request for the first item.

At block 1214, (in response to the request and results of second assigning the second unit), digital instructions are transmitted to a second electronic scale apparatus located within the second zone and associated with the second unit. The digital instructions are executed for activating the second electronic scale apparatus to enable a second user to dynamically fulfil the request for the second item.

In some implementations, activating the first electronic scale apparatus includes enabling operation of a first visual indicator of the first electronic scale apparatus. The first visual indicator is configured to visually alert the first user to fulfil the request for the first item. Likewise, activating the second electronic scale apparatus includes enabling operation of a second visual indicator of the second electronic scale apparatus. The second visual indicator is configured to visually alert the second user to fulfil the request for the second item.

In some implementations, activating the first electronic scale apparatus includes enabling operation of a first audible indicator of the first electronic scale apparatus. The first audible indicator is configured to audibly alert the first user to fulfil the request for the first item. Likewise, activating the second electronic scale apparatus includes enabling operation of a second audible indicator of the second electronic scale apparatus. The second audible indicator is configured to audibly alert the second user to fulfil the request for the second item.

In some implementations, the method further receives (from the electronic scale apparatus) scanned Bluetooth signal information and queried zone assignments. The scanned Bluetooth signal information is associated with Bluetooth signals transmitted from additional electronic scale apparatuses located within a signal transmission area with respect to communications with the first electronic scale apparatus. The queried zone assignments are associated with currently assigned zones of the additional electronic scale apparatuses. The first unit is assigned to the first zone further in response to the scanned Bluetooth signal information and the queried zone assignments.

In some implementations, the method further receives (from the electronic scale apparatus) scanned Wi-Fi signal strength information and queried zone assignments. The scanned Wi-Fi signal strength information is associated with scanned Wi-Fi signals transmitted from additional electronic scale apparatuses located within a signal transmission area with respect to communications with the first electronic scale apparatus. The queried zone assignments are associated with currently assigned zones of the additional electronic scale apparatuses. The first unit is assigned to the first zone further in response to the scanned Wi-Fi signal strength information and the queried zone assignments.

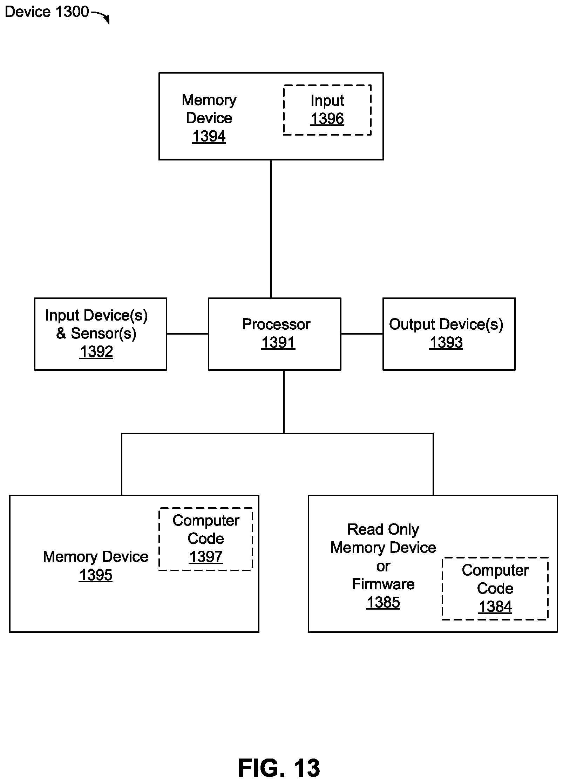

FIG. 13 illustrates a hardware device 1300 (e.g., gateway hardware device or electronic scale apparatus 1020a-1020c of FIG. 10) used by or comprised by scale-based order fulfillment system 1000 of FIG. 10 for improving software/hardware implemented scale detection and assignment technology associated with activating an electronic scale apparatus to enable a user to dynamically fulfil an item request, in accordance with some implementations.

Aspects of the present invention may take the form of an entirely hardware embodiment, an entirely software embodiment (including firmware, resident software, micro-code, etc.) or an embodiment combining software and hardware aspects that may all generally be referred to herein as a "circuit," "module," or "system."

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing apparatus receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++, spark, R language, or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, device (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing device to produce a machine, such that the instructions, which execute via the processor of the computer or other programmable data processing device, create means for implementing the functions/acts specified in the flowchart and/or block diagram block or blocks. These computer readable program instructions may also be stored in a computer readable storage medium that can direct a computer, a programmable data processing device, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing device, or other device to cause a series of operational steps to be performed on the computer, other programmable device or other device to produce a computer implemented process, such that the instructions which execute on the computer, other programmable device, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the Figures. For example, two blocks shown in succession may, in fact, be accomplished as one step, executed concurrently, substantially concurrently, in a partially or wholly temporally overlapping manner, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The hardware device 1300 illustrated in Fig. 13 includes a processor 1391, an input device/sensors 1392 coupled to the processor 1391, an output device 1393 coupled to the processor 1391, and memory devices 1394 and 1395 each coupled to the processor 1391. The input device/sensors 1392 may be, inter alia, a keyboard, a mouse, a camera, a touchscreen, any type of sensors, etc. The output device 1393 may be, inter alia, a printer, a plotter, a computer screen, a magnetic tape, a removable hard disk, a floppy disk, etc. The memory devices 1394 and 1395 may be, inter alia, a hard disk, a floppy disk, a magnetic tape, an optical storage such as a compact disc (CD) or a digital video disc (DVD), a dynamic random access memory (DRAM), a read-only memory (ROM), etc. The memory device 1395 includes a computer code 1397. The computer code 1397 includes algorithms (e.g., the algorithms of Figs. 11 and 12) for improving software/hardware implemented scale detection and assignment technology associated with activating an electronic scale apparatus to enable a user to dynamically fulfil an item request. The processor 1391 executes the computer code 1397. The memory device 1394 includes input data 1396. The input data 1396 includes input required by the computer code 1397. The output device 1393 displays output from the computer code 1397. Either or both memory devices 1394 and 1395 (or one or more additional memory devices Such as read only memory device or firmware 1385) may include algorithms (e.g., the algorithm of Figs. 11 and 12) and may be used as a computer usable medium (or a computer readable medium or a program storage device) having a computer readable program code embodied therein and/or having other data stored therein, wherein the computer readable program code includes the computer code 1397. Generally, a computer program product (or, alternatively, an article of manufacture) of the Hardware device 1300 may include the computer usable medium (or the program storage device).

In some embodiments, rather than being stored and accessed from a hard drive, optical disc or other writeable, rewriteable, or removable hardware memory device 1395, stored computer program code 1384 (e.g., including algorithms) may be stored on a static, nonremovable, read-only storage medium such as a Read-Only Memory (ROM) device 1385, or may be accessed by processor 1391 directly from such a static, nonremovable, read-only medium 1385. Similarly, in some embodiments, stored computer program code 1397 may be stored as computer-readable firmware 1385, or may be accessed by processor 1391 directly from such firmware 1385, rather than from a more dynamic or removable hardware data-storage device 1395, such as a hard drive or optical disc.

While Fig. 13 shows the hardware device 1300 as a particular configuration of hardware and software, any configuration of hardware and software, as would be known to a person of ordinary skill in the art, may be utilized for the purposes stated supra in conjunction with the particular hardware device 1300 of FIG. 13. For example, the memory devices 1394 and 1395 may be portions of a single memory device rather than separate memory devices.

While embodiments of the present invention have been described herein for purposes of illustration, many modifications and changes will become apparent to those skilled in the art. Accordingly, the appended claims are intended to encompass all such modifications and changes as fall within the true spirit and scope of this invention. Certain embodiments of the invention are described in the following clauses:
Clause 1. A gateway hardware controller comprising:
   a non-transitory computer-readable storage medium; and
   one or more processors coupled to the non-transitory computer-readable storage medium,
   wherein the non-transitory computer-readable storage medium comprises specialized program instructions that, when executed on the one or more processors, cause the gateway hardware controller to perform operations comprising:
   receiving via a user interface from a user, a request for a first item from an entity;
   scanning a database comprising links between a plurality of zones, at differing locations of a physical environment of the entity, and specified units of said entity, wherein each zone of the plurality of zones is associated with differing items provided by the entity;
   in response to results of said scanning, assigning a first unit of the specified units to a first zone of the plurality of zones, wherein the first unit is associated with a location of the first item; and
   in response to the request and results of said assigning, transmitting to an electronic scale apparatus located within the first zone and associated with the first unit, digital instructions executed for activating the electronic scale apparatus to enable a user to dynamically fulfil the request for the first item.
Clause 2. The gateway hardware controller of clause 1, wherein said activating the electronic scale apparatus comprises enabling operation of a visual indicator of the electronic scale apparatus, wherein the visual indicator visually alerts the user to fulfil the request.
Clause 3. The gateway hardware controller of clause 1, wherein said activating the electronic scale apparatus comprises enabling operation of an audible indicator of the electronic scale apparatus, wherein the audible indicator audibly alerts the user to fulfil the request.
Clause 4. The gateway hardware controller of clause 1, wherein the operations further comprise:
   receiving, from the electronic scale apparatus, scanned Bluetooth signal information and queried zone assignments, wherein the scanned Bluetooth signal information is associated with Bluetooth signals transmitted from additional electronic scale apparatuses located within a signal transmission area with respect to communications with the electronic scale apparatus, wherein the queried zone assignments are associated with currently assigned zones of the additional electronic scale apparatuses, and wherein said assigning is executed further in response to the scanned Bluetooth signal information and the queried zone assignments.
Clause 5. The gateway hardware controller of clause 1, wherein the operations further comprise:
   receiving, from the electronic scale apparatus, scanned Wi-Fi signal strength information and queried zone assignments, wherein the scanned Wi-Fi signal strength information is associated with scanned Wi-Fi signals transmitted from additional electronic scale apparatuses located within a signal transmission area with respect to communications with the electronic scale apparatus, wherein the queried zone assignments are associated with currently assigned zones of the additional electronic scale apparatuses, and wherein said assigning is executed further in response to the scanned Wi-Fi signal strength information and the queried zone assignments.
Clause 6. The gateway hardware controller of clause 1, wherein the operations further comprise:
   receiving, from the electronic scale apparatus, scanned local area network (LAN) information and queried zone assignments, wherein the scanned LAN information is associated with ip address ranges of additional electronic scale apparatuses located within a signal transmission area with respect to communications with the electronic scale apparatus, wherein the queried zone assignments are associated with currently assigned zones of the additional electronic scale apparatuses, and wherein said assigning is executed further in response to the scanned LAN information and the queried zone assignments.
Clause 7. The gateway hardware controller of clause 1, wherein said scanning results in retrieval of existing zone usage data associated with attributes of items associated with each said zone, and wherein said assigning is executed further in response to the existing zone usage data.
Clause 8. The gateway hardware controller of clause 1, wherein said scanning results in retrieval of configuration attributes of additional electronic scale apparatuses located within a specified distance from the electronic scale apparatus, and wherein said assigning is executed further in response to the configuration attributes.
Clause 9. The gateway hardware controller of clause 8, wherein the configuration attributes comprise attributes selected from the group consisting of hardware attributes, software attributes, and mechanical attributes.
Clause 10. The gateway hardware controller of clause 1, wherein the operations further comprise:
   receiving, from the electronic scale apparatus, information identifying users that are manually logged into additional electronic scale apparatuses located within a specified range of the electronic scale apparatus, and wherein said assigning is executed further in response to the information.
Clause 11. The gateway hardware controller of clause 1, wherein the operations further comprise:
   receiving, from the electronic scale apparatus, information identifying users that are remotely logged into additional electronic scale apparatuses located within a specified range of the electronic scale apparatus, and wherein said assigning is executed further in response to the information.
Clause 12. The gateway hardware controller of clause 11, wherein the users are remotely logged into the additional electronic scale apparatuses via a hands free login hardware device.
Clause 13. The gateway hardware controller of clause 1, wherein said scanning results in retrieval of existing zone usage data associated with users located within each said zone, and wherein said assigning is executed further in response to the existing zone usage data.
Clause 14. The gateway hardware controller of clause 1, wherein the operations further comprise:
   receiving, from the electronic scale apparatus, scanned Wi-Fi signal strength information associated with a scanned Wi-Fi signal transmitted from a Wi-Fi access point located within a signal transmission area with respect to communications with the electronic scale apparatus, and wherein said assigning is executed further in response to the scanned Wi-Fi signal strength information.
Clause 15. A gateway hardware controller comprising:
   a non-transitory computer-readable storage medium; and
   one or more processors coupled to the non-transitory computer-readable storage medium,
   wherein the non-transitory computer-readable storage medium comprises specialized program instructions that, when executed on the one or more processors, cause the gateway hardware controller to perform operations comprising:
   receiving via a user interface from a user, a request for a first item and a second item from an
      entity;
   scanning a database comprising links between a plurality of zones, at differing locations of a
      physical environment of the entity, and specified units of said entity, wherein each zone of the plurality of zones is associated with differing items provided by the entity;
   in response to results of said scanning, first assigning a first unit of the specified units to a first
      zone of the plurality of zones, wherein the first unit is associated with a first location of the first item;
   in response to results of said scanning, second assigning a second unit of the specified units to a
      second zone of the plurality of zones, wherein the second unit is associated with a second location of the second item, and wherein the first location differs from the second location;
   in response to the request and results of said first assigning, transmitting to a first electronic scale
      apparatus located within the first zone and associated with the first unit, digital instructions executed for activating the first electronic scale apparatus to enable a first user to dynamically fulfil the request for the first item; and
   in response to the request and results of said second assigning, transmitting to a second electronic
      scale apparatus located within the second zone and associated with the second unit, digital instructions executed for activating the second electronic scale apparatus to enable a second user to dynamically fulfil the request for the second item.
Clause 16. The gateway hardware controller of clause 15, wherein said activating the first electronic scale apparatus comprises enabling operation of a first visual indicator of the first electronic scale apparatus, wherein the first visual indicator visually alerts the first user to fulfil the request for the first item, wherein said activating the second electronic scale apparatus comprises enabling operation of a second visual indicator of the second electronic scale apparatus, and wherein the second visual indicator visually alerts the second user to fulfil the request for the second item.
Clause 17. The gateway hardware controller of clause 15, wherein said activating the first electronic scale apparatus comprises enabling operation of a first audible indicator of the first electronic scale apparatus, wherein the first audible indicator audibly alerts the first user to fulfil the request for the first item, wherein said activating the second electronic scale apparatus comprises enabling operation of a second audible indicator of the second electronic scale apparatus, and wherein the second audible indicator audibly alerts the second user to fulfil the request for the second item.
Clause 18. The gateway hardware controller of clause 15, wherein the operations further comprise:
   receiving, from the first electronic scale apparatus, scanned Bluetooth signal information and queried zone assignments, wherein the scanned Bluetooth signal information is associated with Bluetooth signals transmitted from additional electronic scale apparatuses located within a signal transmission area with respect to communications with the first electronic scale apparatus, wherein the queried zone assignments are associated with currently assigned zones of the additional electronic scale apparatuses, and wherein said first assigning is executed further in response to the scanned Bluetooth signal information and the queried zone assignments.
Clause 19. The gateway hardware controller of clause 15, wherein the operations further comprise:
   receiving, from the first electronic scale apparatus, scanned Wi-Fi signal strength information and queried zone assignments, wherein the scanned Wi-Fi signal strength information is associated with scanned Wi-Fi signals transmitted from additional electronic scale apparatuses located within a signal transmission area with respect to communications with the first electronic scale apparatus, wherein the queried zone assignments are associated with currently assigned zones of the additional electronic scale apparatuses, and wherein said first assigning is executed further in response to the scanned Wi-Fi signal strength information and the queried zone assignments.
Clause 20. A method comprising:
   at a gateway hardware controller having a processor:
   receiving via a user interface from a user, a request for a first item from an entity;
   scanning a database comprising links between a plurality of zones, at differing locations of a
      physical environment of the entity, and specified units of said entity, wherein each zone of the plurality of zones is associated with differing items provided by the entity;
   in response to results of said scanning, assigning a first unit of the specified units to a first zone
      of the plurality of zones, wherein the first unit is associated with a location of the first item; and
   in response to the request and results of said assigning, transmitting to an electronic scale
      apparatus located within the first zone and associated with the first unit, digital instructions executed for activating the electronic scale apparatus to enable a user to dynamically fulfil the request for the first item.

## Claims

1. A gateway hardware controller comprising:
a non-transitory computer-readable storage medium; and
one or more processors coupled to the non-transitory computer-readable storage medium,
wherein the non-transitory computer-readable storage medium comprises specialized program instructions that, when executed on the one or more processors, cause the gateway hardware controller to perform operations comprising:
receiving via a user interface from a user, a request for a first item from an entity;
scanning a database comprising links between a plurality of zones, at differing locations of a physical environment of the entity, and specified units of said entity, wherein each zone of the plurality of zones is associated with differing items provided by the entity;
in response to results of said scanning, assigning a first unit of the specified units to a first zone of the plurality of zones, wherein the first unit is associated with a location of the first item; and
in response to the request and results of said assigning, transmitting to an electronic scale apparatus located within the first zone and associated with the first unit, digital instructions executed for activating the electronic scale apparatus to enable a user to dynamically fulfil the request for the first item.

2. The gateway hardware controller of claim 1, wherein said activating the electronic scale apparatus comprises enabling operation of a visual indicator of the electronic scale apparatus, wherein the visual indicator visually alerts the user to fulfil the request, or wherein said activating the electronic scale apparatus comprises enabling operation of an audible indicator of the electronic scale apparatus, wherein the audible indicator audibly alerts the user to fulfil the request.

3. The gateway hardware controller of claim 1, wherein the operations further comprise:
receiving, from the electronic scale apparatus, scanned Bluetooth signal information and queried zone assignments, wherein the scanned Bluetooth signal information is associated with Bluetooth signals transmitted from additional electronic scale apparatuses located within a signal transmission area with respect to communications with the electronic scale apparatus, wherein the queried zone assignments are associated with currently assigned zones of the additional electronic scale apparatuses, and wherein said assigning is executed further in response to the scanned Bluetooth signal information and the queried zone assignments.

4. . The gateway hardware controller of claim 1, wherein the operations further comprise:
receiving, from the electronic scale apparatus, scanned Wi-Fi signal strength information and queried zone assignments, wherein the scanned Wi-Fi signal strength information is associated with scanned Wi-Fi signals transmitted from additional electronic scale apparatuses located within a signal transmission area with respect to communications with the electronic scale apparatus, wherein the queried zone assignments are associated with currently assigned zones of the additional electronic scale apparatuses, and wherein said assigning is executed further in response to the scanned Wi-Fi signal strength information and the queried zone assignments.

5. The gateway hardware controller of claim 1, wherein the operations further comprise:
receiving, from the electronic scale apparatus, scanned local area network (LAN) information and queried zone assignments, wherein the scanned LAN information is associated with ip address ranges of additional electronic scale apparatuses located within a signal transmission area with respect to communications with the electronic scale apparatus, wherein the queried zone assignments are associated with currently assigned zones of the additional electronic scale apparatuses, and wherein said assigning is executed further in response to the scanned LAN information and the queried zone assignments.

6. The gateway hardware controller of claim 1, wherein said scanning results in retrieval of existing zone usage data associated with attributes of items associated with each said zone, and wherein said assigning is executed further in response to the existing zone usage data

7. The gateway hardware controller of claim 1, wherein said scanning results in retrieval of configuration attributes of additional electronic scale apparatuses located within a specified distance from the electronic scale apparatus, and wherein said assigning is executed further in response to the configuration attributes, and optionally wherein the configuration attributes comprise attributes selected from the group consisting of hardware attributes, software attributes, and mechanical attributes.

8. The gateway hardware controller of claim 1, wherein the operations further comprise:
receiving, from the electronic scale apparatus, information identifying users that are manually logged into additional electronic scale apparatuses located within a specified range of the electronic scale apparatus, and wherein said assigning is executed further in response to the information.

9. The gateway hardware controller of claim 1, wherein the operations further comprise:
receiving, from the electronic scale apparatus, information identifying users that are remotely logged into additional electronic scale apparatuses located within a specified range of the electronic scale apparatus, and wherein said assigning is executed further in response to the information, and optionally wherein the users are remotely logged into the additional electronic scale apparatuses via a hands free login hardware device.

10. The gateway hardware controller of claim 1, wherein said scanning results in retrieval of existing zone usage data associated with users located within each said zone, and wherein said assigning is executed further in response to the existing zone usage data, or wherein the operations further comprise:
receiving, from the electronic scale apparatus, scanned Wi-Fi signal strength information associated with a scanned Wi-Fi signal transmitted from a Wi-Fi access point located within a signal transmission area with respect to communications with the electronic scale apparatus, and wherein said assigning is executed further in response to the scanned Wi-Fi signal strength information.

11. A gateway hardware controller comprising:
a non-transitory computer-readable storage medium; and
one or more processors coupled to the non-transitory computer-readable storage medium,
wherein the non-transitory computer-readable storage medium comprises specialized program instructions that, when executed on the one or more processors, cause the gateway hardware controller to perform operations comprising:
receiving via a user interface from a user, a request for a first item and a second item from an
entity;
scanning a database comprising links between a plurality of zones, at differing locations of a
physical environment of the entity, and specified units of said entity, wherein each zone of the plurality of zones is associated with differing items provided by the entity;
in response to results of said scanning, first assigning a first unit of the specified units to a first
zone of the plurality of zones, wherein the first unit is associated with a first location of the first item;
in response to results of said scanning, second assigning a second unit of the specified units to a
second zone of the plurality of zones, wherein the second unit is associated with a second location of the second item, and wherein the first location differs from the second location;
in response to the request and results of said first assigning, transmitting to a first electronic scale
apparatus located within the first zone and associated with the first unit, digital instructions executed for activating the first electronic scale apparatus to enable a first user to dynamically fulfil the request for the first item; and
in response to the request and results of said second assigning, transmitting to a second electronic
scale apparatus located within the second zone and associated with the second unit, digital instructions executed for activating the second electronic scale apparatus to enable a second user to dynamically fulfil the request for the second item.

12. The gateway hardware controller of claim 11, wherein said activating the first electronic scale apparatus comprises enabling operation of a first visual indicator of the first electronic scale apparatus, wherein the first visual indicator visually alerts the first user to fulfil the request for the first item, wherein said activating the second electronic scale apparatus comprises enabling operation of a second visual indicator of the second electronic scale apparatus, and wherein the second visual indicator visually alerts the second user to fulfil the request for the second item or
wherein said activating the first electronic scale apparatus comprises enabling operation of a first audible indicator of the first electronic scale apparatus, wherein the first audible indicator audibly alerts the first user to fulfil the request for the first item, wherein said activating the second electronic scale apparatus comprises enabling operation of a second audible indicator of the second electronic scale apparatus, and wherein the second audible indicator audibly alerts the second user to fulfil the request for the second item.

13. The gateway hardware controller of claim 11, wherein the operations further comprise:
receiving, from the first electronic scale apparatus, scanned Bluetooth signal information and queried zone assignments, wherein the scanned Bluetooth signal information is associated with Bluetooth signals transmitted from additional electronic scale apparatuses located within a signal transmission area with respect to communications with the first electronic scale apparatus, wherein the queried zone assignments are associated with currently assigned zones of the additional electronic scale apparatuses, and wherein said first assigning is executed further in response to the scanned Bluetooth signal information and the queried zone assignments.

14. The gateway hardware controller of claim 11, wherein the operations further comprise:
receiving, from the first electronic scale apparatus, scanned Wi-Fi signal strength information and queried zone assignments, wherein the scanned Wi-Fi signal strength information is associated with scanned Wi-Fi signals transmitted from additional electronic scale apparatuses located within a signal transmission area with respect to communications with the first electronic scale apparatus, wherein the queried zone assignments are associated with currently assigned zones of the additional electronic scale apparatuses, and wherein said first assigning is executed further in response to the scanned Wi-Fi signal strength information and the queried zone assignments.

15. A method comprising:
at a gateway hardware controller having a processor:
receiving via a user interface from a user, a request for a first item from an entity;
scanning a database comprising links between a plurality of zones, at differing locations of a
physical environment of the entity, and specified units of said entity, wherein each zone of the plurality of zones is associated with differing items provided by the entity;
in response to results of said scanning, assigning a first unit of the specified units to a first zone
of the plurality of zones, wherein the first unit is associated with a location of the first item; and
in response to the request and results of said assigning, transmitting to an electronic scale
apparatus located within the first zone and associated with the first unit, digital instructions executed for activating the electronic scale apparatus to enable a user to dynamically fulfil the request for the first item.
